# EUROPEAN PATENT APPLICATION

(11) **EP 1 818 337 A1**
(43) Date of publication of application: **15.08.2007**
(21) Application number: 06290247.3
(22) Date of filing: 10.02.2006
(51) Int. Cl.: C07F 17/00, C08F 4/52, C08F 12/08

(54) **Production of isotactic polystyrene**

(71) Applicant: TOTAL PETROCHEMICALS RESEARCH FELUY, 7181 Seneffe (Feluy) (BE); CENTRE NATIONAL DE LA RECHERCHE SCIENTIFIQUE (CNRS), 75016 Paris (FR)
(72) Inventor: Carpentier, Jean-François, 35690 Acigné (FR); Rodrigues, Anne-Sophie, 35700 Rennes (FR); Kirillov, Evgueni, 35000 Rennes (FR); Razavi, Abbas, 7000 Mons (BE)
(74) Representative: Roufosse, Micheline C.

(57) **Abstract**

The present invention discloses the use of neutral ansa-bis(indenyl) allyl lanthanide complexes for the isospecific homo- or co-polymerisation of styrene.
A neutral ansa-bis(indenyl) allyl lanthanide complex, for the isospecific homo- or co-polymerisation of styrene, of general formula
[(lnd)R"(lnd)]Ln(allyl)(ether)ₙ
wherein (lnd) is a substituted or unsubstituted indenyl or hydrogenated indenyl group, R" is a bridge between the 1,1'-indenyl groups imparting stereorigidity to the complex, Ln is a metal Group 3 of the Periodic Table including the lanthanide elements, allyl is an allylic group of the general formula C₃R₅ wherein each R is the same or different and is hydrogen or alkyl group, ether is a donor solvent is claimed.

## Description

This invention relates to new neutral ansa-bis(indenyl) allyl lanthanide complexes that are very active, without any co-catalyst or activator, in the preparation of highly isotactic polystyrene.

Styrene polymerisation induced by catalyst systems based upon organometallic species of group 3 metals has not been widely investigated. Moderate to high activitiy in the polymerisation of styrene was reported by Hou et al. (Hou, Z.; Zhang, Y.; Tezuka, H.; Xie, P.; Tardif, O.; Koizumi, T.-A.; Yamazaki, H.; Wakatsuki, Y. in J. Am; Chem. Soc. 2000, 122, 10533). They used polymeric Sm(II) derivatives such as [Sm(R)(THF)ₓ(C₅Me₅)₂K(THF)]*ₙ* wherein R was selected from CH(SiMe₃)₂, SiH₃, OAr, SAr, PHAr or N(SiMe₃)₂). The resulting polystyrene was atactic and had high molecular weight.

Baudry-Barbier et al. (Baudry-Barbier, D.; Camus, E.; Dormond, A.; Visseaux, M. in Appl. Organomet. Chem. 1999, 13, 813) used allyl complexes Ln(C₃H₅)₃(Solv)*ₙ*, [Ln(C₃H₅)₄]Li(Solv)*ₙ*, [(Cp-CMe₂CMe₂-Cp)Ln(C₃H₅)]Li(Solv)*ₙ* and (Cp-CMe₂CMe₂-Cp)Ln(C₃H₅) wherein Ln was Nd or Sm to produce syndiotactic-enriched (*rrrr* < 70%) or isotactic-enriched (*mmmm* < 80%) polystyrene.

Controlled, highly syndiospecific polymerisation of styrene mediated by organolanthanides has been achieved so far only with the binary system (C₅Me₄SiMe₃)Sc(CH₂SiMe₃)₂/[Ph₃C][B(C₆F₅)₄] described by Luo et al. (Luo, Y.; Baldamus, J.; Hou, Z. in J. Am. Chem. Soc. 2004, 126, 13910) and with single-component allyl complexes incorporating bridged cyclopentadienyl-fluorenyl ligands described by Kirillov et al. (Kirillov, E.; Toupet, L.; Lehmann, C. W.; Razavi, A.; Kahlal, S.; Saillard, J.-Y.; Carpentier, J.-F. in Organometallics 2003, 22, 4038, and Kirillov, E.; Lehmann, C. W.; Razavi, A.; Carpentier, J.-F. in J . Am. Chem, Soc. 2004, 126, 12240).

There is no group 3 catalytic system reported to produce highly isospecific polystyrene. Isotactic polystyrene was discovered half a century ago but is still best produced by heterogeneous catalysis as described for example by Natta et al. (Natta, G.; Pino, P.; Corradini, P.; Danusso, F.; Mantica, E.; Mazzanti, G.; Moraglio, G. in J. Am. Chem. Soc. 1955, 77, 1708) or by Natta and Corradini (Natta, G.; Corradini, P. in Makromol. Chem. 1955, 16, 77) or by Overberger and Mark (Overberger, C.; Mark, H. in J. Polym. Sci. 1959, 35, 381) or by Kern et al. (Kern, R. J.; Hurst, H. G.; Richard, W. J. In J. Polym. Sci. 1960, 45, 195).

Alternatively, isotactic polystyrene was prepared by anionic polymerisation as described by Cazzaniga and Cohen (Cazzaniga, L.; Cohen, R. E. in Macromolecules 1989, 22, 4125) or by Makino and Hogen-Esch (Makino, T.; Hogen-Esch, T. E. in Macromolecules 1999, 32, 5712).

Another method used some homogeneous group 4 catalysts as described for example in Arai et al. (Arai, T.; Ohtsu, T.; Suzuki, S. In Polym. Prepr. 1998, 39, 220, and Arai, T.; Suzuki, S.; Ohtsu, T. in Olefin Polymerization, ACS Symposium Series, 749, American Chemical Society; Washington, DC, 2000; p 66) or in Capacchione et al. (Capacchione, C.; Proto, A.; Ebeling, H.; Mülhaupt, R.; Möller, K.; Spaniol, T. P.; Okuda, J. in J . Am. Chem. Soc. 2003, 125, 4964 and Capacchione, C.; Manivannan, R.; Barone, M.; Beckerle, K.; Centore, R.; Oliva, L.; Proto, A.; Tuzi, A.; Spaniol, T. P.; Okuda, J. in Organometallics, 2005, 24, 2971).

There is thus a need to develop new catalyst systems capable of producing highly isotactic polystyrene.

It is an aim of the present invention to prepare catalyst systems that are very active without the addition of activating agents.

It is also an aim of the present invention to prepare catalyst systems that can efficiently polymerise styrene.

It another aim of the present invention to prepare highly isotactic polystyrene.

Accordingly, the present invention discloses neutral ansa-bis(indenyl) allyl lanthanide complexes that are very active and selective for preparing isospecific homo- or co-polymers of styrene.

These allyl lanthanides are very active alone and do not require the addition of any activating agents or co-catalysts.

In a preferred embodiment according to the present invention, the bridged bis(indenyl) allyl lanthanide complex is represented by general formula

[(Ind) R" (Ind)] Ln (allyl) (ether)ₙ

wherein (Ind) is a substituted or unsubstituted indenyl or hydrogenated indenyl group, R" is a bridge between the 1,1'-indenyl groups imparting stereorigidity to the complex, Ln is a metal Group 3 of the Periodic Table including the lanthanide elements, allyl is an allylic group of the general formula C₃R₅ wherein each R is the same or different and is hydrogen or alkyl group, ether is a donor solvent preferably selected from diethylether or THF and n is an integer from 1 to ???. Preferably the allyl group is C₃H₅ and the donor solvent is THF.

The substituents on the indenyl groups are not particularly limited: they are the same or different and are independently chosen from hydrogen or a group of formula XR'ᵥ in which X is chosen from Group 14, oxygen or nitrogen and each R' is the same or different and chosen from hydrogen or hydrocarbyl having from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R' as hydrogen or CH₃.

Preferably, the indenyl groups are unsubstituted or mono- or di-substituted with an alkyl or aryl group and they both have the same substitution pattern. When monosubstituted, the substituent on each indenyl group is preferably at position 2 and is selected from methyl, tert-butyl, phenyl, or naphtyl. When di-substituted the substituents on each indenyl group are preferably at positions 2 and 4 and are selected from methyl, tert-butyl, phenyl, or naphtyl. Most preferably both indenyl groups are unsubstituted.

Preferably, Ln is Y or Nd.

Preferably, the bridge R" is Me₂C, Me₂Si or Ph₂C. more preferably, it is Me₂C.

The preferred metallocene catalyst components according to the present invention are represented those of formula (Ind-CMe₂-Ind) Ln (allyl)(ether)ₙ wherein the indenyl groups are unsubstituted, CMe₂ is the bridge, Ln is Y or Nd, allyl is C₃H₅ and ether is THF.

The present invention also discloses a method for preparing the bridged bis(indenyl) allyl lanthanide complexes by a one pot procedure represented for example by scheme 1

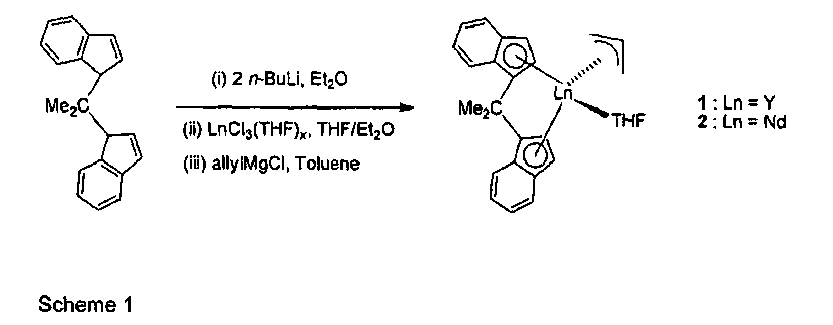

It is a one pot procedure analogous to that used for preparing the bridged cyclopentadienyl-fluorenyl ligands described for example in Kirillov et al. ( Kirillov, E.; Toupet, L.; Lehmann, C. W.; Razavi, A.; Kahlal, S.; Saillard, J.-Y.; Carpentier, J.-F., in Organometallics 2003, 22, 4038; or in Kirillov, E.; Lehmann, C. W.; Razavi, A.; Carpentier, J.-F., in J . Am. Chem. Soc. 2004, 126, 12240).

The salt metathesis reaction in an ether solvent, selected preferably from Et₂O or THF, between, for instance, the dilithiated salt of the ligand and a metal precursor of formula
Ln(Hal)₃ (THF)ₙ wherein Hal is a halogen, preferably selected from Cl, Br; I.
results in halide complexes of general formula

(Ind-R"-Ind) LnX (ether)ₙ.

The halide complex is then directly reacted with an allyl Grignard reagent to yield a neutral allyl lanthanide complex

(Ind-R"-Ind) Ln (allyl) (ether)ₙ

No intermediate purification is necessary.

These complexes are C₂ symmetric and are very active as such in the homo- or co-polymerisation of styrene: they polymerise styrene according to an enantiotopic site control mechanism. Suitable comoners include ethylene and alpha-olefins, the preferred comonomer being ethylene. These complexes can also be used in the polymerisation of ethylene and alpha-olefins.

The present invention also discloses a method for preparing isospecific styrene that comprises the steps of:
a) injecting the neutral allyl lanthanide complex in the reactor;
b) injecting styrene monomer and optional comonomer into the reactor;
c) maintaining under polymerisation conditions;
d) retrieving isotactic polystyrene.

Homo- and co-polymerisation reactions are conducted under inert atmosphere, typically at a pressure of about 1 bar under nitrogen or argon, either in bulk conditions (neat styrene, no solvent) or in a hydrocarbon solvent such as for example cyclohexane. Preferably, polymerisations are conducted in bulk conditions. The styrene-to-catalyst ratio ranges from 400 to 2,500, preferably from 600 to 1,500. The polymerisation temperature ranges from room temperature to 120 °C, preferably from 60 to 100 °C. At the end of polymerisation, methanol is added to the reaction medium to quench the reaction. The polymer is collected by filtration, washed with methanol and dried under vacuum.

The polystyrene obtained according to the present invention is monomodal with a narrow molecular weight distribution. The molecular weight distribution is determined by the polydispersity index D that is the ratio Mw/Mn of the weight average molecular weight Mw over the number average molecular weight Mn, both molecular weights being determined by Gel Permeation Chromatography (GPC). The polydispersity index D is of from 1.2 to 2.5, preferably of from 1.4 to 2.0, thereby indicating the controlled character of the polymerisation reaction. The number average molecular weight Mn is typically of from 20,000 to 290,000 g/mol, preferably of from 60,000 to 150,000 g/mol.

In addition, NMR spectroscopy of the polymers reveals a highly isotactic microstructure. The isotactic index is larger than 95%, preferably larger than 98%. The high isotacticity of polystyrene results in high melting temperature Tm. The melting temperature is determined by DSC calorimetry and is of at least 205 °C. preferably of at least 210 °C.

### List of figures.

Figure 1 represents the GPC curve of the isotactic polystyrene obtained in example 5, where the lanthanide is neodymium.

Figure 2 represents the ¹³C{¹H} NMR spectrum (75 MHz, 25 °C, CDCl₃) of the isotactic polystyrene obtained in example 5, where the lanthanide is neodymium.

### Examples

All reactions were performed under purified argon atmosphere using standard Schlenk techniques, or in a glovebox.

Solvents were distilled from Na/benzophenone (THF, Et₂O) and Na/K alloy (toluene, pentane) under nitrogen, degassed thoroughly and stored under nitrogen prior to use.
Deuterated solvents (benzene-*d*₆, toluene-*d*₈, THF-*d*₈; >99.5% D, Eurisotop) were vacuum-transferred from Na/K alloy into storage tubes.
Styrene (Acros) was dried over CaH₂ and distilled under reduced pressure prior to polymerization experiments.
The ligand Ind-CMe₂-Ind was prepared in house.
NMR spectra of complexes and polymers were recorded on Bruker AC-200, AC-300 and AM-500 spectrometers in Teflon-valved NMR tubes at room temperature unless otherwise indicated. ¹H and ¹³C chemical shifts are reported vs. SiMe₄ and were determined by reference to the residual solvent peaks.
Room temperature GPC analysis of polymers was performed in THF with a Waters apparatus. High temperature GPC analyses were carried out in trichlorobenzene at 135°C.
DMA was carried out at the University of Lorient.

### Synthesis of (Ind-CMe₂-Ind)Y(C₃H₅)(THF) (1).

Under vigorous stirring, 2.0 mL. of *n*-BuLi (3.2 mmol of a 1.6 M solution in hexane) were added to a solution of 0.437 g (1.60 mmol) of IndH-CMe₂-IndH in 20 mL of diethylether at a temperature of -10 °C. The mixture was gently warmed to room temperature. The solution turned yellow and after 3 h a white-yellow crystalline powder precipitated out. To this suspension of the dilithium salt in diethylether was added a suspension of 0.715 g (1.6 mmol) of YCl₃(THF)_{3.5} in 20 mL of diethylether. Upon vigorous stirring and warming to room temperature, the mixture turned bright yellow. Volatiles were removed in vacuum to give a yellow powder. To this powder suspended in 20 mL of toluene, was added 0.80 mL of a 2.0 M solution in THF of allylmagnesium chloride (1.60 mmol). The mixture was stirred for 8 h at room temperature. The resulting yellow solution was filtered and volatiles were removed in vacuum. The residue was washed twice with 15 mL of pentane and dried in vacuum to give 0.64 g of complex 1 as a yellow-beige powder with a yield of 76%.

### Synthesis of (Ind-CMe₂-Ind)Nd(C₃H₅)(THF) (2).

(Ind-CMe₂-Ind)Nd(C₃H₅)(THF) was prepared using a procedure similar to that described above for preparing (Ind-CMe₂-Ind)Y(C₃H₅)(THF) (1), starting instead with 0.436 g (1.60 mmol) of IndH-CMe₂-IndH, 0.632 g (1.60 mmol) of NdCl₃(THF)₂ and 1.0 mL of a 2.0 M solution in THF (2.00 mmol) of allylmagnesium chloride. 0.59 g of complex 2 were isolated as a pale green powder with a yield of 70%.

### Homopolymerization of styrene.

In a glovebox, 3.0 to 10.0 mL of styrene were added to a pre-weighted amount of 20 to 60 mg of allyl-lanthanide complex placed in a Schlenk flask with a magnetic stir bar. Vigorous stirring at the appropriate temperature (oil bath) was immediately started. After a given time period, the Schlenk flask was opened to air and about 1 mL of a 10% solution of HCl in methanol was added to quench the reaction. The polymer precipitate was washed repeatedly with about 500 mL of methanol, filtered and dried in vacuum. The polymerization conditions are displayed in Table I and the results are displayed in Table II.

**TABLE I.**

| Example | Complex | [St]/[Ln] | Temperature °C | Time min |
|---|---|---|---|---|
| 1 | **1** | 600 | 60 | 30 |
| 2 | **1** | 500 | 80 | 15 |
| 3 | **1** | 1200 | 80 | 29 |
| 4 | **1** | 500 | 100 | 5 |
| 5 | **2** | 600 | 60 | 35 |
| 6 | **2** | 600 | 60 | 45 |
| 7 | **2** | 600 | 100 | 5 |

**TABLE II.**

| Ex. | Yield g | Activity Kg PS/mol.h | Mn kD | D |
|---|---|---|---|---|
| 1 | 2.37 | 65 | 72 | 1.54 |
| 2 | 1.58 | 181 | 58 | 1.85 |
| 3 | 1.66 | 135 | 74 | 1.85 |
| 4 | 1.67 | 527 | 26 | 1.72 |
| 5 | 0.72 | 41 | 125 | 1.42 |
| 6 | 2.54 | 49 | 102 | 1.57 |
| 7 | 0.77 | 307 | 52 | 1.60 |

0.02-0.08 mmol of lanthanide were used, for a total volume of 2 to 5 mL.
The pressure was of 1 bar.
The number average and weight average molecular weights were determined by GPC in THF versus PS standards.

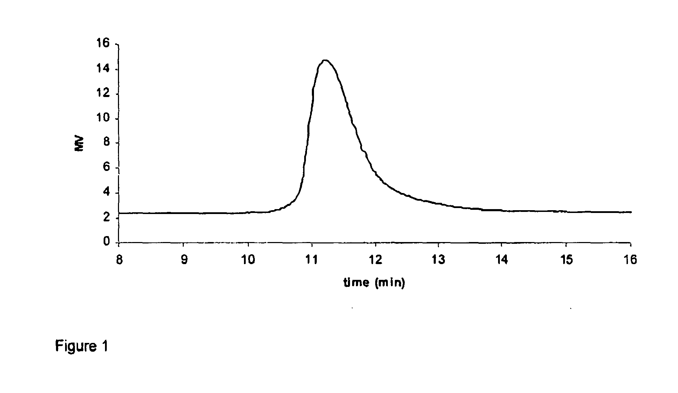

The GPC curve of the isotactic polystyrene of example 5 is displayed in Figure 1.

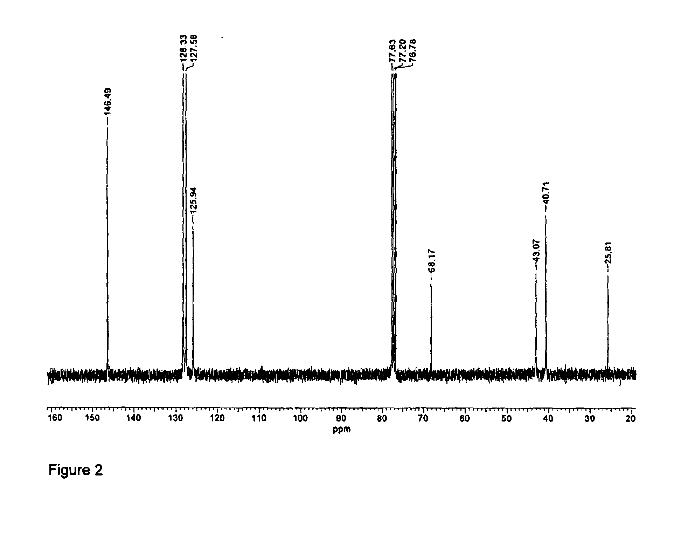

The ¹³C{¹H} NMR spectrum (75 MHz, 25 °C, CDCl₃) of the isotactic polystyrene of example 5 is presented in Figure 2.

### Copolymerization of styrene with ethylene.

A double-walled glass reactor equipped with a mechanic stirring (Pelton turbine) was charged under nitrogen with 10.0 mL to 60.0 mL of freshly distilled styrene. The atmosphere was purged with ethylene till saturation of the solution. Then a solution of 20 to 200 mg of allyl-lanthanide complex in 1.0 to 2.0 mL of styrene was added in the reactor by syringe. The reactor was immediately pressurised with 5 atm of ethylene, heated to the requested temperature by circulating hot water or oil in the double wall of the reactor, and stirring was started. The ethylene pressure was kept constant during polymerisation via a back regulator and the ethylene consumption was monitored with a flowmeter. After a given time period, the reactor was opened to air and about 1 mL of a 10% solution of HCl in methanol was added to quench the reaction. The polymer precipitate was washed repeatedly with about 500 mL of methanol, filtered and dried in vacuum. The polymerization conditions are displayed in Table III and the results are displayed in Table IV.

**TABLE III**

| Example | Complex | [St]/[Ln] | Temperature °C | Time min |
|---|---|---|---|---|
| 8 | 1 | 1000 | 60 | 60 |
| 9 | 2 | 1200 | 60 | 120 |

**TABLE IV**

| Ex. | Yield g | Activity Kg PS-PE/mol.h | Styrene Incopor mol% | Mn kD | D |
|---|---|---|---|---|---|
| 8 | 1.67 | 4 | 84 | nd | nd |
| 9 | 0.18 | 1 | 76 | nd | nd |

0.05-0.15 mmol of lanthanide were used, for a total volume of 15 to 60 mL.
The pressure was of 5 bar of ethylene.
The amount of styrene incoporated was determined by ¹H NMR in CDCl₃.
The number average and weight average molecular weights were determined by GPC in TCB at 135 °C versus PS standards.

## Claims

1. A neutral ansa-bis(indenyl) allyl lanthanide complex, for the isospecific homo- or co-polymerisation of styrene, of general formula
[(Ind) R" (Ind)] Ln (allyl) (ether)ₙ
wherein (Ind) is a substituted or unsubstituted indenyl or hydrogenated indenyl group, R" is a bridge between the 1,1'-indenyl groups imparting stereorigidity to the complex, Ln is a metal Group 3 of the Periodic Table including the lanthanide elements, allyl is an allylic group of the general formula C₃R₅ wherein each R is the same or different and is hydrohen or alkyl group, ether is a donor solvent and **n is an integer from 1 to ??**.

2. The complex of claim 1 wherein the allyl group is C₃H₅, the donor solvent is THF and n is 1.

3. The complex of claim 1 or clam 2 wherein the substituents on the indenyl groups are the same or different and are independently chosen from hydrogen or a group of formula XR'ᵥ in which X is chosen from Group 14, oxygen or nitrogen, preferably C, and each R' is the same or different and chosen from hydrogen or hydrocarbyl having from 1 to 20 carbon atoms and v+1 is the valence of X.

4. The complex of any one of claims 1 to 3 wherein the indenyl groups are unsubstituted or mono- or di-substituted with an alkyl or aryl group and they both have the same substitution pattern.

5. The complex of claim 4 wherein the substituents on each indenyl group are at positions 2 and/or 4 and are selected from methyl, tert-butyl, phenyl, or naphtyl.

6. The complex of claim 4 wherein both indenyl groups are unsubstituted.

7. The complex of any one of the preceding claims wherein Ln is Y or Nd.

8. The complex of any one of the preceding claims wherein the bridge R" is Me₂C, Me₂Si or Ph₂C, preferably Me₂C.

9. A process for preparing the neutral allyl lanthanide complex of any one of claims 1 to 7 by salt metathesis reaction between the dilithiated salt of the ligand and metal precursor, followed by reaction with allyl Grignard reagent.

10. An active catalyst system for the isospecific homo- or co-polymerisation of styrene that consists of the neutral allyl lanthanide complex of any one of claims 1 to 9.

11. A process for preparing isospecific homo- or co-polymers of styrene that comprises the steps of:
a) injecting the active catalyst system of claim 9 into the reactor;
b) injecting styrene and optional comonomer into the reactor;
c) maintaining under polymerisation conditions;
d) retrieving isotactic polystyrene.

12. Isotactic polystyrene having an isotactic index of at least 95% obtainable by the method of claim 11.
